# EUROPÄISCHE PATENTSCHRIFT

(11) **EP 2 113 332 B1**
(45) Veröffentlichungstag und Bekanntmachung des Hinweises auf die Patenterteilung: **18.08.2010**
(21) Anmeldenummer: 08008336.3
(22) Anmeldetag: 02.05.2008
(51) Int. Cl.: B23K 26/06

(54) **Verfahren und Laservorrichtung zum Bearbeiten und/oder Verbinden von Werkstücken mittels Laserstrahlung mit Leistungswirk- und Pilotlaser und mindestens einem diffraktiven optischen Element**
Method of and laser device for working and/or joining of workpieces with poweracting and pilot lasers and at least one diffractive optical element
Procédé et dispositif pour l'usinage et/ou assemblage de pièces avec des lasers de puissance et pilote et au moins un élément optique diffractant

(43) Veröffentlichungstag der Anmeldung: 04.11.2009
(73) Patentinhaber: Leister Process Technologies, 6056 Kägiswil (CH)
(72) Erfinder: Scheidt, Michael, 8623 Wetzikon (CH); Gubler, Ulrich, 6006 Luzern (CH)
(74) Vertreter: Klocke, Peter

(56) Entgegenhaltungen:
- DE-A1- 19 836 115
- DE-A1- 19 959 862
- US-A- 4 102 572
- US-A1- 2002 021 723
- US-A1- 2005 098 548

## Beschreibung

Die Erfindung betrifft ein Verfahren und eine Vorrichtung zum Bearbeiten und/oder Verbinden von Werkstücken mittels Laserstrahlung, mit einem Leistungswirklaser und einem Pilotziellaser, die einen Wirklaserstrahl und eine Pilotlaserstrahl unterschiedlicher Wellenlänge abgeben, wobei die Laserstrahlen über eine Laseroptik auf die Werkstücke gerichtet sind und die Laserstrahlen des Wirklasers und des Pilotziellasers mittels einer Laseroptik mit frei bestimmbaren, sich überdeckenden lage- und formgleichen Strahlmustern auf die Werkstücke abgebildet werden, gemäß dem Oberbegriff der Ansprüche 1 und 5 (siehe z. B. DE 198 36 115 A). Bei dem Pilotziellaser handelt es sich um einen im sichtbaren Spektralbereich emittierenden Laser, der den Rüstvorgang und die Prozessüberwachung vereinfacht.

Derartige Laservorrichtungen und Laserverfahren sind aus der Praxis bekannt. Bei der Bearbeitung oder dem Verbinden von Werkstücken mit elektromagnetischer Strahlung, insbesondere mit einem Laserstrahl, spielen die Größe und die Form des auf die Werkstücke gerichteten Strahlprofils eine wichtige Rolle. Außerdem kommt es dabei zusätzlich auf die richtig eingestellte Leistungsdichteverteilung innerhalb des erzeugten Brennflecks an. Zudem müssen mit dem Laserstrahl auf den Werkstücken oft Wärmeverteilungsmuster oder Schweißnähte mit vielfältiger Form hergestellt werden. Dazu wird mit dem verwendeten Leistungswirklaser ein fokussierter Strahlfleck auf den Werkstücken erzeugt, dessen Größe und Form entsprechend der jeweiligen Laseraufgabe einzustellen ist, um optimale Arbeitsergebnisse zu erzielen.

Das Einstellen des gewünschten Strahlfleckes und das genaue Ausrichten des Strahlfleckes gegenüber den Werkstücken, um auf diesen an einer bestimmten Stelle punktuell oder entlang einer vorgesehen Linie mit dem Wirklaserstrahl einzuwirken, ist oft mit Schwierigkeiten verbunden, da das Laserlicht des Leistungswirklasers in der Regel nicht oder nur sehr schwer sichtbar ist. Dies gilt gleichermaßen neben dem Rüstvorgang der Laservorrichtung auch für den Laserprozess der Werkstücke und erschwert so eine laufende Prozessüberwachung während des Laservorganges.

Zur Reduzierung der Schwierigkeiten ist es bekannt, in den Strahlengang für den Wirklaserstrahl einen Pilotlaserstrahl einzubringen, der von einem Pilotziellaser mit einem sichtbaren Wellenlängenbereich ausgeht. Der Pilotlaserstrahl wird so gelenkt und geformt, dass sein sichtbarer Strahlfleck gegenüber dem unsichtbaren Strahlfleck des Leistungswirklasers eine im wesentlichen identische Form aufweist und die Zentren der beiden Strahlflecke übereinander zu liegen kommen. Wegen der unterschiedlichen Wellenlänge des Wirklaser- und Pilotlaserstrahls beeinflusst die Laseroptik die Laserstrahlen des Leistungswirklasers und des Pilotziellasers in der Regel unterschiedlich, so dass der Strahlfleck des Pilotziellasers gegenüber dem des Leistungswirklasers auf den Werkstücken im Durchmesser kleiner ausgebildet ist.

Oft ist es wünschenswert oder erforderlich, die genaue Größe des Strahlfleckes des Leistungswirklasers zu kennen, der auf die Werkstücke einwirkt. Um die Unterschiede zwischen den Wellenlängen des Pilotlaserstrahls und des Wirklaserstrahls und der damit einhergehenden unterschiedlichen Brechungs- und Fokussierungsverhalten zu kompensieren, ist es erforderlich, den Pilotlaserstrahl aufzuweiten und damit die Größe des Pilotlaserstrahlfleckes bzw. -musters an die des Wirklaserstrahlfleckes bzw. -musters anzupassen.

Wird an Stelle eines runden Strahlprofils ein anderes geformtes Strahlprofil für ein spezielles Wärmeverteilungsmuster benötigt, so muss das von der Laserquelle ausgehende runde Strahlprofil durch geeignete Maßnahmen, beispielsweise mit einem diffraktiven optischen Element (DOE) auf die gewünschte Größe und die benötigte Form transformiert werden. Dies kann einerseits für einen Simultanschweißprozess durch fest auf die Aufgabe abgestimmte Optiken oder Masken (fixer DOEs) oder elektronisch steuerbare Optiken (variable DOEs) geschehen. Statt eines runden Strahlfleckes kann damit ein beliebiges Strahlmuster auf den Werkstücken erzeugt werden.

Mit der Patentschrift DE 198 25 092 C2 und der Offenlegungsschrift DE 198 36 115 A1 sind Lasersysteme mit einem Wirklaser und einem Pilotlaser bekannt geworden, bei dem der Strahlquerschnitt des Pilotlasers mittels einem Aufweitungs- und Fokussierungssystem an den Strahlquerschnitt des Wirklasers angepasst wird, so dass diese auf den Werkstücken kreisrunde Strahlflecke identischer Größe aufweisen. Die Strahlformung erfolgt wie üblich mittels konvergierender und divergierender Linsen bzw. Spiegeln, in Verbindung mit totalreflektierenden oder halbdurchlässigen Spiegeln. Die Laserquellen der beiden zitierten Druckschriften weisen ein rundes Strahlprofil auf, das mittels einem oder mehreren diffraktiven optischen Elementen in ein Strahlprofil mit beliebiger Querschnittsform moduliert werde kann. Dazu eignet sich besonders ein elektronischer ortsauflösender Strahlmodulator, der die Amplitude und/oder die Polarisation und/oder die Phase des Laserlichtes verändern kann.

Ein Strahlmodulator, der die Polarisation des Laserlichtes verändert, ist in der DE 10 2004 017 129 A1 offenbart. Der dort beschriebene Strahlmodulator ermöglicht einzelne Abschnitte des Laserstrahls zu polarisieren, um modifizierte und unmodifizierte Abschnitte zu definieren. Ein Polarisationsfilter ist dem Strahlmodulator nachgeschaltet, um den Durchlass der modifizierten oder der nicht modifizierten Abschnitte wahlweise zu verhindern, so dass der Laserstrahl nach dem Passieren des Polarisationsfilters im Querschnitt ein von dem Strahlmodulator bestimmtes Strahlprofil aufweist.

Weiterhin ist aus der US 2002/0021723 A1 eine Laservorrichtung bekannt, bei der zwei Laserstrahlen unterschiedlicher Wellenlänge zur Bearbeitung von Werkstücken eingesetzt werden. Die von unterschiedlichen Leistungswirklaserquellen ausgehenden Wirklaserstrahlen werden über einen speziellen halbdurchlässigen Spiegel zusammengeführt und über ein phasenbeeinflussendes Beugungsgitter simultan auf die Werkstücke abgebildet.

In der US 2005/0098548 A1 ist eine weitere Bearbeitungsvorrichtung unter Verwendung eines Laserstrahls offenbart, welche Haltemittel zum Halten eines Werkstückes und Laseraufbringmittel zur Bestrahlung des Werkstücks mit einem gepulsten Laserstrahl aufweist. Der Laserstrahl ist fähig, das Werkstück zu durchtreten, wobei die Laseraufbringmittel Einrichtungen zum Übertragen und Fokussieren des Laserstrahls aufweist. Dabei weisen die Einrichtungen Oszillationsmittel auf, die den Laserstrahl wenigstens auf zwei Brennpunkten alternierend fokussieren können.

Der Erfindung liegt die Aufgabe zugrunde, eine Möglichkeit vorzuschlagen, das an sich differierende Strahlmuster eines modulierten Leistungswirklaserstrahls und eines Pilotziellaserstrahls unterschiedlicher Wellenlänge auf den Werkstücken zu vereinheitlichen und zur Deckung zu bringen, wobei deren Strahlmuster mit einem elektronischen ortsauflösenden Strahlmodulator einstellbar ist, der die Amplitude und/oder die Polarisation und/oder die Phase des Laserlichtes verändert, und das Strahlprofil des Leistungswirklasers und des Pilotziellasers eine nicht gleichmäßige räumliche Intensitätsverteilung aufweisen.

Diese Aufgabe wird erfindungsgemäß durch ein Laserverfahren mit den Merkmalen des Anspruchs 1 sowie mit einer Laservorrichtung mit den Merkmalen des nebengeordneten Anspruchs 5 gelöst. Weitere vorteilhafte Ausgestaltungen sind den jeweiligen rückbezogenen Unteransprüchen zu entnehmen.

Gemäß dem erfindungsgemäßen Verfahren zum Bearbeiten und/oder Verbinden von Werkstücken mittels Laserstrahlung, unter Anwendung einer Laservorrichtung, die einen Leistungswirklaser und einen Pilotziellaser aufweist, welche einen Pilotlaserstrahl und eine Wirklaserstrahl unterschiedlicher Wellenlänge über eine Laseroptik auf die Werkstücke gerichtet abgeben, werden die Laserstrahlen des Leistungswirklasers und des Pilotziellasers mittels einer Laseroptik, die mindestens ein diffraktives optisches Element (DOE) aufweist, mit frei bestimmbaren, sich vorzugsweise überdeckenden lage-, form- und größengleichen Strahlmustern auf die Werkstücke abgebildet. Das mindestens eine in die Laseroptik integrierte diffraktive optische Element bestimmt die Form der Strahlmuster auf den Werkstücken.

Dabei können die Strahlmuster des Wirklaserstrahles und des Pilotlaserstrahles voneinander abhängig mittels eines einzigen DOEs erzeugt werden, durch das die Strahlen des Leistungswirklaser und des Pilotziellasers in gleicher Weise beeinflusst werden, wobei das DOE auf die Strahlen bei einer Transmission durch das DOE oder bei einer Reflektion an dem DOE einwirken kann. Die zu beeinflussenden Laserstrahlen des Leistungswirklasers und des Pilotziellasers können jeweils gleichzeitig, alternierend, oder auch für sich allein auf das eine diffraktive optische Element gerichtet sein. Es ist auch möglich, zwei diffraktive optische Elemente zur Formung der Strahlmuster der beiden Laserstrahlen zu verwenden, die nebeneinander angeordnet sind. Dabei können die beiden DOEs gleich oder unterschiedlich ausgebildet sein. Sie erzeugen die Strahlmuster des Wirklaserstrahles und des Pilotlaserstrahles voneinander unabhängig, und beeinflussen die Strahlen in gleicher oder unterschiedlicher Weise. Auch hier können die zu beeinflussenden Laserstrahlen des Leistungswirk- und des Pilotziellasers jeweils gleichzeitig, alternierend, oder auch für sich allein auf das entsprechende diffraktive Element gerichtet sein.

Bei dem neuen Verfahren wird entweder ein diffraktives optisches Element gemeinsam für die beiden Laserstrahlen verwendet, das unterschiedlich große formgleiche Strahlmuster erzeugt. Nach dem DOE wird dann der kleinere Strahlquerschnitt des Pilotlaserstrahls an den größeren Strahlquerschnitt des Wirklaserstrahls angepasst, so dass die Größe der Strahlmuster auf den Werkstücken in etwa gleich sind. Alternativ werden zwei unterschiedlich ausgebildete diffraktive optische Elemente für die Form- und Größenbestimmung der Strahlmuster verwendet, wobei je ein diffraktives optisches Element einem der beiden Laserstrahlen zugeordnet ist. Die beiden diffraktiven optischen Elemente sind vorzugsweise so ausgebildet, dass sie den Strahlquerschnitt des Pilotlaserstrahls und den Strahlquerschnitt des Wirklaserstrahls aneinander anpassen, so dass die Größe der Strahlmuster auf den Werkstücken in etwa gleich ist.

Bei einer bevorzugten Ausführungsform der Erfindung wird der Pilotlaserstrahl vorteilhafterweise für eine Teilwegstrecke zwischen dem in Transmission oder Reflektion betriebenen, diffraktiven optischen Element und den Werkstücken von dem Wirklaserstrahl getrennt. Der getrennte Pilotlaserstrahl wird in seinem Querschnitt vergrößert und insbesondere an den des Wirklaserstrahls an den Werkstücken angepasst.

Bei einem bevorzugten Verfahrensablauf der Erfindung wird der Pilotlaserstrahl aus dem Strahlengang des Wirklaserstrahls mit wellenlängenabhängigen Spiegeln aus- und eingekoppelt. Die wellenlängenabhängigen Spiegel lenken den Pilotlaserstrahl oder den Wirklaserstrahl um, lassen jedoch den jeweils anderen Laserstrahl im Wesentlichen ungehindert passieren.

Gemäß einem vorteilhaften Verfahrensablauf wird der Strahlquerschnitt des Pilotlaserstrahls nach der Trennung von dem Wirklaserstrahl mittels voneinander beabstandeter, in ihrem Abstand zu den die Strahlumlenkmittel bildenden dichroischen Spiegeln durch Umlenkspiegel aufgeweitet, die die Strahlaufweitungsmittel bilden, und insbesondere an den Strahlquerschnitt des Wirklaserstrahls an den Werkstücken angepasst. Dabei wird mit der Verlängerung der Wegstrecke des Strahlenganges für den Pilotlaserstrahl die Aufweitung des Pilotlaserstrahls durch die zunehmende Divergenz bewirkt. Die zusätzliche Wegstrecke für den Pilotlaserstrahl ist veränderbar, indem die beiden Umlenkspiegel, die in einem 90 Grad Winkel zueinander angeordnet sind, entweder auf die Umlenkmittel zu oder von diesen ein Stück weit weg bewegt werden.

Bei der Verwendung von zwei unabhängig voneinander wirkenden diffraktiven optischen Elementen ist je nach Ausbildung der beiden DOEs und deren Anordnung zueinander, zu den Werkstücken und zu dem Leistungswirk- bzw. dem Pilotziellaser eine zusätzliche Strahlaufweitung des Pilotlaserstrahls zwischen dem entsprechenden DOE und den Werkstücken nicht mehr erforderlich. Es kann damit bei geschickter Wahl auf das dem DOE nachgeschaltete Strahlaufweitungssystem gänzlich bzw. auf dessen Strahlumlenkmittel bzw. Strahlaufweitungsmittel verzichtet werden.

Bei der erfindungsgemäßen Vorrichtung zum Bearbeiten und/oder Verbinden von Werkstücken mittels Laserstrahlung bildet die Laseroptik die Laserstrahlen des Leistungswirklasers und des Pilotziellasers mit einem frei bestimmbaren, lagegleichen, formgleichen Strahlmuster auf den Werkstücken ab. Die Laseroptik der Vorrichtung weist zur Bestimmung der Form der Strahlmuster der beiden Laserstrahlen mindestens ein diffraktives optisches Element und zur Bestimmung einer im wesentlichen einheitlichen Größe der Strahlmuster ein Strahlaufweitungssystem auf, das die Größe des Strahlmusters des Pilotziellasers an die Größe des Strahlmusters des Leistungswirklasers anpasst. Das Strahlaufweitungssystem für den Pilotlaserstrahl ist dem mindestens einem diffraktiven optischen Element (DOE) im Strahlengang vorzugsweise nachgeordnet vorgesehen. Dabei geben der Leistungswirklaser und der Pilotziellaser einen Laserstrahl unterschiedlicher Wellenlänge ab, wobei die Wellenlänge des Pilotziellasers gegenüber der des Leistungswirklasers kleiner ist und für das menschliche Auge im optisch sichtbaren Spektralbereich liegt. Die Abbildung der Strahlmuster des Wirklaserstrahls und des Pilotlaserstrahls ist simultan oder alternierend möglich. Bei alternierendem Betrieb kann die Abbildungsdauer für die beiden Strahlmuster gleich oder unterschiedlich sein. Natürlich kann das Strahlmuster des Pilotlasers auch gänzlich während des Schweißprozesses abgeschaltet sein und neu zu Kontrollzwecken zu beliebigen Zeitpunkten temporär zugeschaltet werden.

Das diffraktive optische Element, das einen Laserstrahl ohne zusätzliche Hilfsmittel scharf auf die Werkstücke abzubilden vermag, kann dabei in Transmission oder in Reflektion betrieben werden und moduliert die Phase des Laserlichtes räumlich. Sinn der Phasenmodulation ist es, die Phase des Laserlichtes so zu modulieren, dass ein gewünschtes Indifferenzmuster entsteht. Es können dazu fixe oder variable DOEs verwendet sein. Bei einem fixen DOE ist die Phaseninformation fest in das Material geschrieben, beispielsweise durch geätzte Strukturen in der Oberfläche oder durch im Volumen erzeugte Brechungsindexunterschiede. Variable DOEs sind elektro-optische Bauelemente, die elektronisch steuerbar sind.

So werden beispielsweise durch einen Flüssigkristall-Phasenmodulator als variables DOE, ausgehend von einem polarisierten Strahlungsfeld mit ausreichender transversaler Kohärenz, die Phasenlagen einzelner Teilbereiche des auftreffenden Laserstrahls kontrolliert verändert, so dass die Teilbereiche nach dem diffraktiven optischen Element in der gewünschten Weise interferieren. Durch die Flüssigkristallzellen wird der auftreffende Laserstrahl in einzelne Teilstrahlenbündel zerteilt. Jedes der Teilstrahlenbündel wird dabei in den individuell ansteuerbaren Zellen in einer bestimmten Weise phasenmoduliert. Nach dem Verlassen des DOEs bilden die einzelnen Teilstrahlen in ihrer Gesamtheit einen neuen Laserstrahl. Die Modulation eines von der jeweiligen Flüssigkristallzelle bestimmten Teilstrahlenbündels erfolgt dabei besonders einfach und flexibel und insbesondere unabhängig von den anderen Teilstrahlenbündeln.

Das fixe oder variable diffraktive optische Element wirkt bei der erfindungsgemäßen Laservorrichtung gleichermaßen auf den Pilotlaserstrahl wie auch auf den Wirklaserstrahl ein. Dabei kann das DOE für den Pilotlaserstrahl und den Wirklaserstrahl unterschiedlich oder gleich bezüglich der Transmission oder Reflektion betrieben werden, wobei die Laserstrahlen des Pilotziellasers und des Leistungswirklasers von einer oder von unterschiedlichen Richtungen auf das DOE gerichtet sein können. Außerdem können die beiden Laserstrahlen an mindestens einem DOE auf einer oder unterschiedlichen Seiten auftreffen.

Jeder von einer Laserquelle abgegebene Laserstrahl weist eine gewisse Konvergenz auf, d.h. eine Aufweitung nach dem Strahlaustritt aus der Laserquelle mit zunehmender Entfernung, die ein Maß für die Strahlqualität darstellt. Die geringe Konvergenz des Pilotlaserstrahls und des Wirklaserstrahls vor dem diffraktiven optischen Element, die auch unterschiedlich sein können, wird durch die Beugung und die Phasenmodulation am DOE beeinflusst, so dass sich die Laserstrahlen des Pilotziellasers und des Leistungswirklasers nach dem DOE in der gewünschten Weise räumlich ausbreiten. Bedingt durch die unterschiedlichen Wellenlängen des Pilot- und des Wirklaserstrahls erfolgt die Aufweitung nach dem diffraktiven optischen Element unterschiedlich, was ein unterschiedlich großes Strahlmuster für den Pilotlaserstrahl und den Wirklaserstrahl auf den Werkstücken verursacht.

Um den gegenüber dem Leistungswirklaser kleinere Strahlmuster des Pilotziellasers auf die Größe des Strahlmusters des Leistungswirklasers zu bringen, weist die Laseroptik der erfindungsgemäßen Laservorrichtung ein Strahlaufweitungssystem auf, das die Größe des Pilotlaserstrahlmusters verändert, indem es den Strahlquerschnitt des Pilotlaserstrahls gezielt steuerbar aufweitet. Damit das Strahlaufweitungssystem den Laserstrahl des Pilotziellasers unabhängig von dem Wirklaserstrahl beeinflussen kann, ist es erforderlich, den Pilotlaserstrahl nach dem diffraktiven optischen Element von dem Wirklaserstrahl zu trennen.

Dazu weist das Aufweitungssystem vorteilhafterweise Strahlumlenkmittel zwischen dem DOE und den Werkstücken auf, die den Pilotlaserstrahl aus dem Strahlengang des Wirklaserstrahls für eine Teilwegstrecke auskoppeln. Dabei erfolgt die Auskoppelung und/oder die Einkoppelung des Pilotlaserstrahls aus bzw. in den Wirklaserstrahl vorzugsweise mit wellenlängenabhängigen Spiegeln.

Die wellenlängenabhängigen Spiegel, die auch als dichroische Spiegel bezeichnet werden, werden als Strahlweiche eingesetzt. Sie verändern vorzugsweise die Ausbreitungsrichtung des Wirklaserstrahles nicht und lenken den Pilotlaserstrahl in seiner Richtung durch Reflexion an der Oberfläche um vorzugsweise 90 Grad um. Dazu sind sie idealerweise in einem Winkel von 45 Grad gegenüber der optischen Achse der Laseroptik angeordnet. Abhängig davon, ob das DOE für die Laserstrahlen des Pilot- und des Wirklasers in Reflektion oder Transmission betrieben werden soll und in welchem Winkel zur optischen Achse der Laseroptik die Laserstrahlen aus dem Pilotziel- und dem Leistungswirklaser austreten, können die zwei wellenlängenabhängigen Spiegel jeweils oberhalb, jeweils unterhalb oder unterhalb und oberhalb des DOEs angeordnet sein. Dabei können die zwei dichroischen Spiegel jeweils parallel zueinander oder in einem zweckmäßigen Winkel von 90 Grad zueinander angeordnet sein.

In einer vorteilhaften Ausführungsform der Erfindung weist das Strahlaufweitungssystem Aufweitungsmittel zum Vergrößern des Strahlquerschnittes des Pilotziellasers auf. Die Strahlaufweitungsmittel sind in der von den Wellenlängen abhängigen Spiegeln bestimmten Teilwegstrecke für den Laserstrahl des Pilotlasers angeordnet. Sie weiten den Strahlquerschnitt einstellbar unter Ausnutzung der Divergenz des Pilotlaserstrahls einstellbar auf, ohne die Divergenz des Wirklaserstrahls zu beeinflussen. Vorzugsweise erfolgt nach der Auskoppelung des Pilotlaserstrahls aus dem Wirklaserstrahl mit einem der Strahlumlenkmittel dessen Aufweitung mittels zweier Umlenkspiegel, deren Abstand gegenüber den die Strahlumlenkmittel bildenden dichroischen Spiegeln variabel einstellbar ist. Die beiden Umlenkspiegel sind totalreflektierend ausgebildet und lenken den Pilotlaserstrahl jeweils um 90 Grad um. Sie sind vorzugsweise jeweils um 45 Grad zu der optischen Achse der Laseroptik geneigt angeordnet und in Richtung der dichroischen Spiegel bzw. des diffraktiven optischen Elementes ausgerichtet. Es ist auch möglich, den Abstand der Umlenkspiegel, die die Strahlweitungsmittel bilden, zueinander zusätzlich oder für sich allein zu verändern.

Die beiden Umlenkspiegel wirken mit den beiden wellenlängenabhängigen Spiegeln und gemäß einer Variante mit einem wellenlängenabhängigen Spiegel und dem DOE zusammen und weiten den Pilotlaserstrahl zwischen der Aus- und Einkoppelungsstelle der Laseroptik veränderbar auf, indem sie die Wegstrecke zwischen dem DOE und den Werkstücken gegenüber der direkten Wegstrecke verlängern. Dabei wird der kleinere Ablenkwinkel des Pilotlaserstrahls im Vergleich mit dem größeren Ablenkwinkels des Wirklaserstrahls dadurch kompensiert, dass sich der Strahlquerschnitt des Pilotlaserstrahls auf der verlängerten Wegstrecke bedingt durch seine Divergenz zusätzlich vergrößert. Die Entfernung der beiden Strahlaufweitungsmittel gegenüber den Strahlumlenkmitteln ist einstellbar, so dass die Länge der Wegstrecke für den Pilotlaserstrahl veränderbar ist und damit die Größe des Strahlmusters des Pilotlaserstrahls auf den Werkstücken an die Größe des Strahlmusters des Wirklaserstrahls angepasst werden kann.

Bei der vorstehend beschriebenen Kompensation ist für die Bestimmung der räumlichen Intensitätsverteilung des Strahlprofils von dem Pilotziel- und dem Leistungswirklaser die Verwendung eines einzigen oder zweier, vorzugsweise nebeneinander angeordneter DOEs möglich.

Eine Alternative ergibt sich bei der Verwendung von zwei unterschiedlichen DOEs zur getrennten Beeinflussung des Pilot- und des Wirklaserstrahls. Die beiden DOEs sind vorzugsweise nebeneinander auf einem gemeinsamen Träger angeordnet, der quer zu der Richtung des Wirklaser- bzw. des Pilotlaserstrahls in der Laseroptik verschiebbar aufgenommen ist. Damit können die Laserstrahlen abhängig von der Position des Trägers entweder gleichzeitig auf die beiden DOEs bzw. alternativ auf keines der beiden DOEs gerichtet sein oder jeweils nur auf ein in dem Strahlengang befindliches der beiden DOEs auftreffen. Bei einer alternativen Möglichkeit werden die DOEs auf dem Träger vorteilhafterweise abwechselnd in den Strahlengang eingeführt. Die Erzeugung der Strahlmuster erfolgt insbesondere mit fixen oder variablen DOEs. Die fixen DOEs sind vorzugsweise geätzt, die variablen DOEs elektronisch steuerbar und können in Transmission oder Reflektion betrieben sein. Dabei können die diffraktiven Muster für die DOEs einen gemeinsamen Körper aufweisen und dort aneinander angrenzend oder voneinander beabstandet angeordnet sein oder auf zwei separaten Körpern ausgebildet sein, die sich in einer gemeinsamen Fassung befinden.

Nachfolgend wird die Erfindung anhand von fünf in der Zeichnung dargestellten Ausführungsbeispielen näher erläutert. Weitere Merkmale der Erfindung ergeben sich aus der folgenden Beschreibung des jeweiligen Ausführungsbeispiels der Erfindung in Verbindung mit den Ansprüchen und der beigefügten Zeichnung. Die einzelnen Merkmale können dabei für sich allein oder zu mehreren bei unterschiedlichen Ausführungsformen der Erfindung verwirklicht sein. Die Figuren der Zeichnung zeigen in einer schematischen Darstellung ausschnittsweise dargestellte erfindungsgemäße Laservorrichtungen mit einem diffraktiven optischen Element zur Erzeugung von Strahlmustern. Es stellen dar:
- Figur 1: Laseroptik einer ersten Laservorrichtung, bei der das DOE für die beiden Laserstrahlen in gleicher Richtung in Transmission vor- gesehen ist;
- Figur 2: die Laseroptik einer zweiten Laservorrichtung, bei der das DOE für die beiden Laserstrahlen in entgegengesetzter Richtung in Trans- mission vorgesehen ist;
- Figur 3: die Laseroptik einer dritten Laservorrichtung, bei der das DOE für die beiden Laserstrahlen in gleicher Richtung in Reflektion vorge- sehen ist;
- Figur 4: die Laseroptik einer vierten Laservorrichtung, die als Anordnungs- variante der dritten Laservorrichtung entspricht; und
- Figur 5: die Laseroptik einer fünften Laservorrichtung, bei der das DOE für die beiden Laserstrahlen in entgegengesetzter Richtung in Reflek- tion betrieben ist;

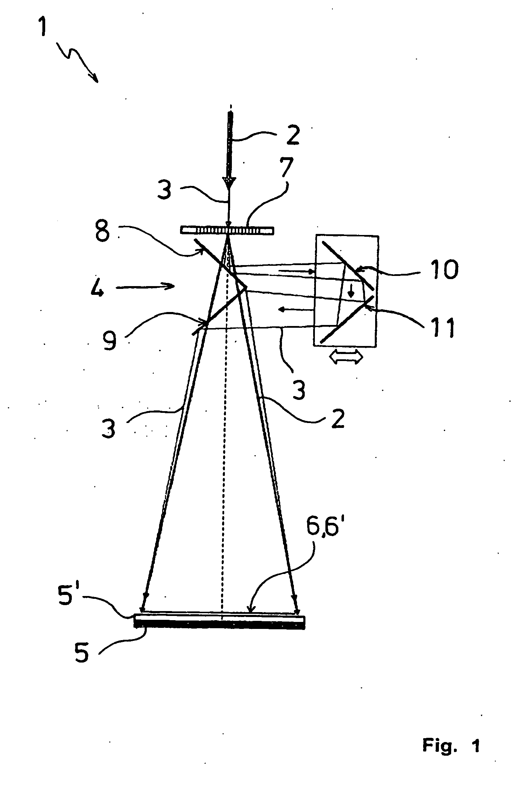

Figur 1 zeigt eine erste erfindungsgemäße Laservorrichtung 1 mit einem in der Zeichnung nicht dargestellten Leistungswirklaser sowie einem nicht dargestellten Pilotziellaser, die mit einem Wirklaserstrahl 2 und einem Pilotlaserstrahl 3 über eine Laseroptik 4 auf zwei übereinander liegende Werkstücke 5, 5' einwirken. Das Laserlicht der Laserstrahlen 2, 3 weist eine unterschiedliche Wellenlänge auf, wobei die Wellenlänge des Pilotlaserstrahls 3 im für das menschliche Auge sichtbaren Spektralbereich liegt. Der Wirklaserstrahl 3 wird mit einem Strahlmuster 6 und der Pilotlaserstrahl 3 mit einem Strahlmuster 6' mittels der Laseroptik 4 auf den Werkstücken 5, 5' abgebildet. Die Strahlmuster 6, 6' liegen übereinander und sind in der Form und der Größe gleich.

Die Laseroptik 4 umfasst ein diffraktives optisches Element (DOE) 7, zwei dichroische Spiegel 8, 9 als Strahlumlenkmittel für den Pilotlaserstrahl 3 sowie zwei Umlenkspiegel 10, 11 als Strahlaufweitungsmittel für diesen. Das DOE 7 ist parallel zu den Werkstücken 5, 5' und senkrecht zu den beiden auftreffenden Laserstrahlen 2, 3 ausgerichtet. Dieses wird in diesem Fall in Transmission betrieben. Die Laserstrahlen 2, 3 passieren das DOE 7 an derselben Stelle und erfahren aufgrund ihrer unterschiedlichen Wellenlänge eine unterschiedliche Beugung. Der Strahlquerschnitt des Pilotlaserstrahls 3 ist damit nach dem DOE 7 kleiner als der des Wirklaserstrahls 2. Zur Angleichung des Strahlmusters 6' des Pilotlaserstrahls 3 an das Strahlmuster 6 des Wirklaserstrahls 2 wird der Pilotlaserstrahl 3 nach dem DOE 7 aus dem Wirklaserstrahl 2 ausgekoppelt.

Die Auskopplung erfolgt mit einem dem DOE 7 nächst liegenden dichroischen Spiegel 8, der in einem Winkel von 45 Grad zu dem DOE 7 angeordnet ist und den Pilotlaserstrahl 3 um 90 Grad ablenkt. Der abgelenkte Pilotlaserstrahl 3 fällt dann auf den ersten Umlenkspiegel 10, der die gleiche Neigung wie der erste dichroische Spiegel 8 aufweist. Dieser führt den Laserstrahl 3 wiederum um 90 Grad umgelenkt dem zweiten Umlenkspiegel 11 zu, der in einem Winkel von 90 Grad zu dem ersten Umlenkspiegel 10 ausgerichtet ist. Zwischen dem Umlenkspiegel 10, 11 verläuft der Pilotlaserstrahl 3 parallel zu dem Wirklaserstrahl 2. Der zweite Umlenkspiegel 11 reflektiert den Laserstrahl 3 zu dem zweiten dichroischen Spiegel 9 hin, der diesen wiederum um 90 Grad in Richtung des Wirklaserstrahls 2 umlenkt.

Die beiden dichroischen Spiegel 8, 9 die den Pilotlaserstrahl 3 aus dem Wirklaserstrahl 2 auskoppeln bzw. nach dem Umlenkspiegeln 10, 11 wieder in diesen einkoppeln, sind um 90 Grad zueinander versetzt ausgerichtet. Der Wirklaserstrahl 2 tritt durch die beiden dichroischen Spiegel 8, 9 hindurch, ohne von diesen beeinflusst zu werden. Der Abstand der beiden außerhalb des Strahlenganges des Wirklaserstrahls 2 liegenden Umlenkspiegel 10, 11 ist gegenüber den dichroischen Spiegeln 8, 9 veränderbar, wodurch die Wegstrecke für den Pilotlaserstrahl 3 gegenüber der des Wirklaserstrahls 2 variabel einstellbar ist. Eine Vergrößerung der Weglänge bewirkt für jeden konvergierenden Laserstrahl eine Vergrößerung des Strahlquerschnittes mit zunehmender Entfernung von der Laserquelle. Dies trifft auch für den Pilotlaserstrahl 3 zu, dessen Weglänge gegenüber der des Wirklaserstrahls 2 so einstellbar ist, dass das Strahlmuster 6' des Pilotlaserstrahls 3 dem Strahlmuster 6 des Wirklaserstrahls 2 in der Größe entspricht.

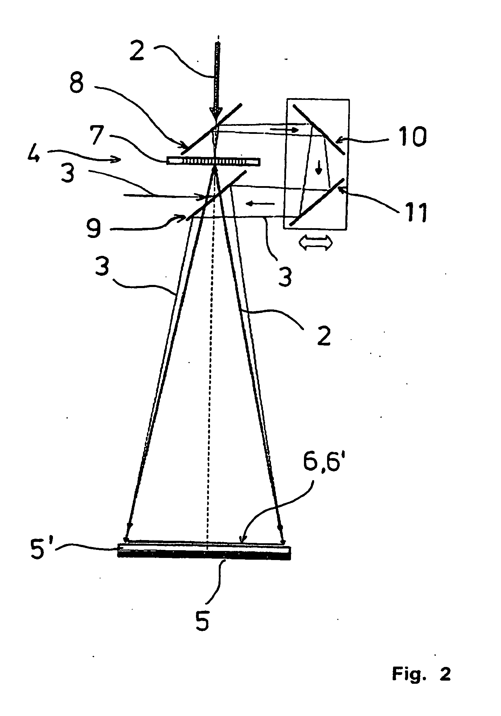

Figur 2 zeigt die Laseroptik 4 einer zweiten erfindungsgemäßen Laservorrichtung, bei der der Pilotlaserstrahl 3 und der Wirklaserstrahl 2 von unterschiedlichen Seiten her senkrecht auf das DOE 7 auftreffen. Der Wirklaserstrahl 2 und der Pilotlaserstrahl 3 verlaufen nach ihrem Austritt aus den in der Zeichnung nicht dargestellten Laserquellen orthogonal zueinander, wobei sich der Pilotlaserstrahl 3 senkrecht und der Wirklaserstrahl 2 parallel zu der optischen Achse der Laseroptik 4 ausbreitet.

Der Pilotlaserstrahl 3 trifft auf die Laseroptik 4 vorzugsweise zwischen dem DOE 7 und den Werkstücken 5, 5' und wird durch einen dort befindlichen ersten dichroischen Spiegel 9 in Richtung des DOE 7 umgelenkt. Nach dem Durchtritt durch das DOE 7 fällt der Pilotlaserstrahl 3 auf den zweiten dichroischen Spiegel 8, der parallel zu dem Spiegel 9 angeordnet ist. Er wird von dem Siegel 8 in Richtung der beiden Umlenkspiegel 10, 11 gelenkt, die den beiden dichroischen Spiegeln 8, 9 diametral gegenüberliegen. Die beiden Umlenkspiegel 10, 11 richten den Pilotlaserstrahl 3 zu dem ersten dichroischen Spiegel 9 aus, über den der Pilotlaserstrahl 3 wieder in den Strahlengang des Wirklaserstrahls 2 eingekoppelt wird. Der Abstand zwischen den Umlenkspiegeln 10, 11 und den dichroischen Spiegeln 8, 9 ist, wie bereits bei dem in Figur 1 beschriebenen Ausführungsbeispiel, veränderbar. Das Aufweiten des Pilotlaserstrahls 3 erfolgt demnach auf die gleiche Weise, wie bei Figur 1 beschrieben.

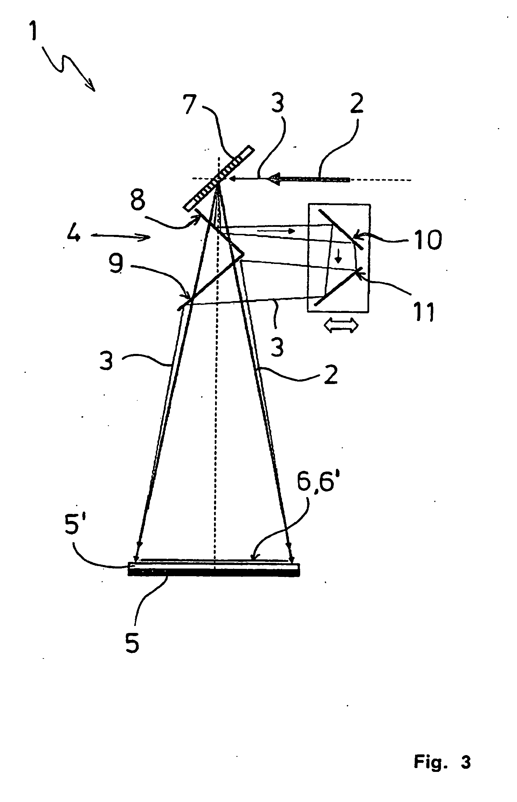

Figur 3 zeigt ein drittes erfindungsgemäßes Ausführungsbeispiel, bei dem das DOE 7 in Reflektion für den Pilotlaserstrahl 3 und den Wirklaserstrahl 2 betrieben wird. Bei der Laseroptik 4 sind die dichroischen Spiegel 8, 9 und die Umlenkspiegel 10, 11 genauso gegenüber den Werkstücken 5, 5' angeordnet, wie in der Figur 1. Die Laserstrahlen 2, 3 verlaufen jedoch nach dem Austritt aus den Laserquellen parallel zueinander und senkrecht zur optischen Achse der Laseroptik 4. Sie treffen von der gleichen Seite her auf das DOE 7 und werden gemeinsam von diesem in Richtung des ersten dichroischen Spiegels 8 reflektiert. Dazu ist das DOE 7 um 45 Grad gegenüber der optischen Achse der Laseroptik 4 geneigt vorgesehen. Der weitere Verlauf der beiden Laserstrahlen 2, 3 nach dem DOE 7 entspricht dem in der Figur 1 beschriebenen Weg, wobei die Strahlaufweitung des Pilotlaserstrahls 3 in entsprechender Weise erfolgt.

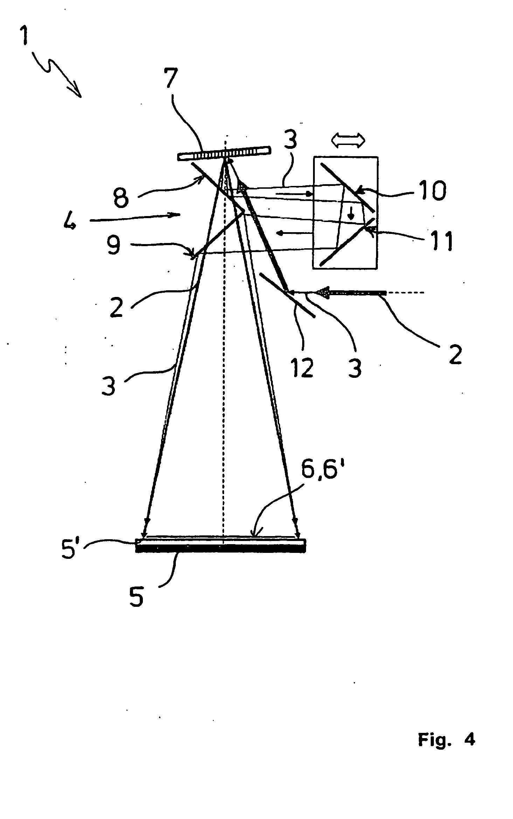

Figur 4 zeigt ein viertes Ausführungsbeispiel der erfindungsgemäßen Laservorrichtung, die im Wesentlichen dem in Figur 3 dargestellten Ausführungsbeispiel entspricht. Die Laserstrahlen 2, 3 erstrecken sich nach dem Austritt aus den Laserquellen parallel zueinander und senkrecht zur optischen Achse der Laseroptik 4 und treffen auf die Laseroptik 4 zwischen den dichroischen Spiegel 8, 9 und den Werkstücken 5, 5'. Sie werden mit Hilfe eines total reflektierenden Spiegelelementes 12, an den dichroischen Spiegeln 8, 9 und den Umlenkspiegeln 10, 11 vorbei, hin zu dem DOE 7 gelenkt. Das DOE 7 reflektiert den Pilotlaserstrahl 3 und den Wirklaserstrahl 2 in Richtung des ersten dichroischen Spiegels 8. Die anschließende Aufweitung des Pilotlaserstrahls 3 erfolgt entsprechend den vorstehend beschriebenen Ausführungsbeispielen 1, 3.

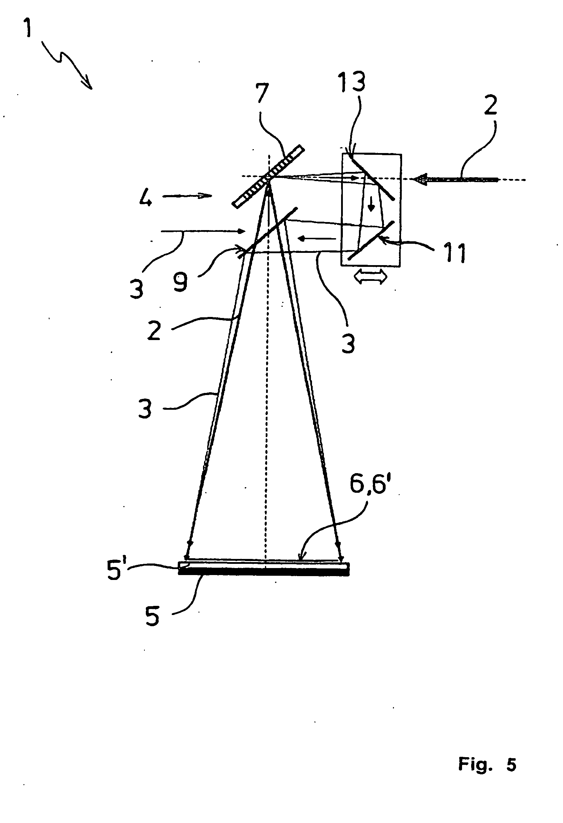

Figur 5 zeigt ein weiteres Ausführungsbeispiel der Erfindung, bei dem das DOE 7 ebenfalls für die beiden Laserstrahlen 2, 3 in Reflektion verwendet ist. Es unterscheidet sich gegenüber dem in der Figur 3 dargestellten und beschriebenen Ausführungsbeispiel dadurch, dass der in dem dritten Ausführungsbeispiel verwendete erste im Strahlengang des Pilotlaserstrahls 3 liegende wellenlängenunabhängige Umlenkspiegel 10 als wellenlängenabhängiger dichroischer Spiegel 13 ausgebildet ist. Der dichroische Umlenkspiegel 13 liegt dem DOE 7 gegenüber, wobei diese jeweils um 45 Grad geneigt zu der optischen Achse der Laseroptik 4 angeordnet sind. Der Wirklaserstrahl 2 und der Pilotlaserstrahl 3 erstrecken sich nach dem Austritt aus der Laserquelle von gegenüberliegenden Seiten her parallel zueinander und senkrecht zu der optischen Achse der Laseroptik 4. Der Wirklaserstrahl 2 passiert den dichroischen Umlenkspiegel 13 von der dem DOE 7 abgewandten Seite her und trifft auf das DOE 7, welches den Strahl 2 zu einem zwischen dem DOE 7 und den Werkstücken 5, 5' angeordneten dichroischen Spiegel 9 reflektiert und auf die Werkstücke 5, 5' richtet. Der Pilotlaserstrahl 3 trifft zunächst auf den in einem Winkel von 45 Grad zu der optischen Achse der Laseroptik 4 und parallel zu dem DOE 7 angeordneten dichroischen Spiegel 9. Der Spiegel 9, lenkt den Pilotlaserstrahl 3 in Richtung des DOE 7, der den Strahl 3 zu dem dichroischen Umlenkspiegel 13 und dem wellenlängenunabhängig ausgeführten Umlenkspiegel 11 weiterleitet. Der Umlenkspiegel 11 reflektiert den Pilotlaserstrahl 3 in Richtung des dichroischen Spiegels 9, der diesen in Richtung der Werkstücke 5, 5' ausrichtet. Der Abstand des dichroischen Umlenkspiegels 13 sowie des Umlenkspiegels 10 ist gegenüber dem DOE 7 und dem dichroischen Spiegel 9 veränderbar, so dass der Pilotlaserstrahl 3 gezielt aufgeweitet werden kann, bis sein Strahlmuster 6' auf den Werkstücken 5, 5' dem Strahlmuster 6 des Wirklaserstrahls 2 entspricht.

## Patentansprüche

1. Verfahren zum Bearbeiten und/oder Verbinden von Werkstücken (5, 5') mittels Laserstrahlung, mit einem Leistungswirklaser und einem Pilotziellaser, die einen Wirklaserstrahl (2) und eine Pilotlaserstrahl (3) unterschiedlicher Wellenlänge abgeben, wobei die Laserstrahlen (2, 3) des Leistungswirklasers und des Pilotziellasers mittels einer Laseroptik (4) mit frei bestimmbaren, sich überdeckenden lage- und formgleichen Strahlmustern (6, 6') auf die Werkstücke (5, 5') abgebildet werden, **dadurch gekennzeichnet, dass** die Form der Strahlmuster (6, 6') mit mindestens einem in der Laseroptik (4) integrierten diffraktiven optischen Element (7) (DOE) bestimmt wird, wobei entweder ein einziges diffraktives optisches Element (7) für die beiden Laserstrahlen (2, 3) verwendet wird und nach dem diffraktiven optischen Element (7) der kleinere Strahlquerschnitt des Pilotlaserstrahls (3) an den größeren Strahlquerschnitt des Wirklaserstrahls (2) unter Verwendung eines Strahlaufweitungssystems angepasst wird, oder wobei zwei unterschiedlich ausgebildete diffraktive optische Elemente (7) verwendet werden und je ein diffraktives optisches Element (7) einem der beiden Laserstrahlen (2, 3) zugeordnet ist und die Laseroptik (4) ferner den Strahlquerschnitt des Pilotlaserstrahls (3) und den Strahlquerschnitt des Wirklaserstrahls (2) aneinander anpasst, so dass die Größe der Strahlmuster (6', 6) auf den Werkstücken (5, 5') in etwa gleich ist.

2. Verfahren nach Anspruch 1, **dadurch gekennzeichnet, dass** der Pilotlaserstrahl (3) für eine Teilwegstrecke zwischen dem diffraktiven optischen Element (7) und den Werkstücken (5, 5') von dem Wirklaserstrahl (2) getrennt und nach der Trennung der Pilotlaserstrahl (3) im Querschnitt vergrößert wird.

3. Verfahren nach Anspruch 1 oder 2, **dadurch gekennzeichnet, dass** der Strahlquerschnitt des Pilotlaserstrahls (3) nach der Trennung von dem Wirklaserstrahl (2) mittels voneinander beabstandeter, in ihrem Abstand zu den Umlenkmitteln (8, 9) veränderbarer Umlenkspiegel (10, 11, 13) als Strahlaufweitungsmittel aufgeweitet und an den Strahlquerschnitt des Wirklaserstrahles (2) an den Werkstücken (5, 5') angepasst wird.

4. Verfahren nach einem der vorangegangen Ansprüche, **dadurch gekennzeichnet, dass** der Pilotlaserstrahl (3) gegenüber dem Wirklaserstrahl (2) mit wellenlängenabhängigen Spiegeln (8, 9) umgelenkt wird.

5. Vorrichtung (1) zum Bearbeiten und/oder Verbinden von Werkstücken mittels Laserstrahlung mit einem Leistungswirklaser und einem Pilotziellaser, die einen Wirklaserstrahl (2) und eine Pilotlaserstrahl (3) unterschiedlicher Wellenlänge abgeben wobei eine Laseroptik (4) die Laserstrahlen (2, 3) auf die Werkstücke (5, 5') richtet und die Laseroptik (4) die Laserstrahlen (2, 3) des Leistungswirklasers und des Pilotziellasers richtet und mit sich überdeckenden lage- und formgleichen Strahlmustern (6, 6') auf die Werkstücke (5, 5') abbildet, **dadurch gekennzeichnet, dass** die Laseroptik (4) zur Bestimmung der Form der Strahlmuster (6, 6') mindestens ein diffraktives optisches Element (7) (DOE) und zur Bestimmung einer einheitlichen Größe der Strahlmuster (6, 6') ein dem diffraktiven optischen Element (7) vorzugsweise nachgelagertes Strahlaufweitungssystem aufweist, wobei das Strahlaufweitungssystem die Größe des Strahlmusters (6') des Pilotlaserstrahls (3) an die Größe des Strahlmusters (6) des Wirklaserstrahls (2) anpasst.

6. Vorrichtung nach Anspruch 5, **dadurch gekennzeichnet, dass** das diffraktive optische Element (7) als ein fixes, vorzugsweise geätztes diffraktives optisches Element (7) ausgebildet ist.

7. Vorrichtung nach Anspruch 5, **dadurch gekennzeichnet, dass** das diffraktive optische Element (7) als ein variables, vorzugsweise elektronisch steuerbares diffraktives optisches Element (7) ausgebildet ist.

8. Vorrichtung nach einem der vorangegangen Ansprüche 5 bis 7, **dadurch gekennzeichnet, dass** das Strahlaufweitungssystem Strahlumlenkmittel (8, 9) zum Trennen des Pilotlaserstrahls (3) von dem Wirklaserstrahl (2) für eine Teilwegstrecke zwischen dem diffraktiven optischen Element (7) und den Werkstücken (5, 5') aufweist.

9. Vorrichtung nach einem der vorangegangen Ansprüche 5 bis 8, **dadurch gekennzeichnet, dass** das Strahlaufweitungssystem Strahlaufweitungsmittel (10, 11, 13) zum Vergrößern des Strahlquerschnitts des Pilotlaserstrahls (3) aufweist.

10. Vorrichtung nach Anspruch 8, **dadurch gekennzeichnet, dass** die Auskopplung und/oder und die Einkopplung des Pilotlaserstrahls (3) aus bzw. in den Wirklaserstrahl (2) mit wellenlängenabhängigen Spiegeln (8, 9) als Strahlumlenkmittel (8, 9) erfolgt.

11. Vorrichtung nach Anspruch 9, **dadurch gekennzeichnet, dass** die Aufweitung des Pilotlaserstrahls (3) nach der Auskopplung mit zwei Umlenkspiegeln (10, 11, 13) als Aufweitungsmittel (10, 11, 13) erfolgt, deren Abstand gegenüber den Umlenkmitteln (8, 9) variabel einstellbar ist.

12. Vorrichtung nach einem der vorangegangenen Ansprüche 5 bis 11, **dadurch gekennzeichnet, dass** die Laseroptik (4) zwei diffraktive optische Elemente (7) aufweist, von denen eines das Strahlmuster (6) des Wirklaserstrahls (2) und das andere das Strahlmuster (6') des Pilotlaserstrahls (3) erzeugt.

13. Vorrichtung nach Anspruch 5, **dadurch gekennzeichnet, dass** die Laseroptik (4) ein zweites diffraktives optisches Element (7) aufweist, wobei die Lascroptik (4) mit dem Strahlaufweitungssystem das Strahlmuster (6) des Wirklaserstrahls (2) und das andere das Strahlmuster (6') des Pilotlaserstrahls (3) erzeugt.

14. Vorrichtung nach Anspruch 12 oder 13, **dadurch gekennzeichnet, dass** die beiden diffraktiven Elemente (7) nebeneinander auf einem gemeinsamen Träger angeordnet sind, der quer zur Richtung des Wirklaserstrahls (2) bzw. des Pilotlaserstrahls (3) verschiebbar in der Laseroptik (4) aufgenommen ist.

15. Vorrichtung nach nach einem der vorangegangenen Ansprüche 12 bis 14, **dadurch gekennzeichnet, dass** für die Erzeugung des Strahlmusters (6, 6') ein fixes, vorzugsweise geätztes diffraktives optisches Element (7) oder ein variables, vorzugsweise elektronisch steuerbares diffraktives optisches Element (7) vorgesehen ist.

## Claims

1. Process for processing and/or joining work pieces (5, 5') by means of laser radiation, with an effective power laser and a pilot target laser, which emit an effective laser beam (2) and a pilot laser beam (3) of different wavelengths, with the laser beams (2, 3) of the effective laser beam and of the pilot laser beam being imaged on the work pieces (5, 5') by means of laser optics (4) with randomly selectable beam patterns (6, 6') which are superimposed and identical in terms of position and form, **characterised in that** the form of the beam patterns (6, 6') is determined with at least one diffractive optical element (7) (DOE) integrated in the laser optics (4), either with a single diffractive optical element (7) being used for the two laser beams (2, 3) and, after the diffractive optical element (7), the smaller beam cross-section of the pilot laser beam (3) being adjusted to match the larger beam cross-section of the effective laser beam (2) using a beam-expanding system, or with two differently designed diffractive optical elements (7) being used, one diffractive optical element (7) being assigned to each of the two laser beams (2, 3), and the laser optics (4) also adjusting the beam cross-section of the pilot laser beam (3) and the beam cross-section of the effective laser beam (2) to each other, so that the size of the beam patterns (6, 6') on the work pieces (5, 5') is approximately the same.

2. Process according to claim 1, **characterised in that** the pilot laser beam (3) is separated from the effective laser beam (2) for part of the path length between the diffractive optical element (7) and the work pieces (5, 5'), and **in that** the cross-section of the pilot laser beam (3) is enlarged after the separation.

3. Process according to claim 1 or 2, **characterised in that** after the separation from the effective laser beam (2), the beam cross-section of the pilot laser beam (3) is expanded by means of deflecting mirrors (10, 11, 13) arranged at a distance from each other and whose distance from the deflection elements (8, 9) is variable, and is adjusted to the beam cross-section of the effective laser beam (2) on the work pieces (5, 5').

4. Process according to one of the preceding claims, **characterised in that** the pilot laser beam (3) is deflected by means of wavelength-dependent mirrors (8, 9) relative to the effective laser beam (2).

5. Device (1) for processing and/or joining work pieces by means of laser radiation with an effective power laser and a pilot target laser which emit an effective laser beam (2) and a pilot laser beam (3) of different wavelengths, wherein laser optics (4) direct the laser beams (2, 3) at the work pieces (5, 5'), and with the laser optics (4) directing the laser beams (2, 3) of the effective laser beam and of the pilot laser beam, imaging said beams on the work pieces (5, 5') with superimposed beam patterns (6, 6') that are identical in terms of position and form, **characterised in that**, in order to determine the form of the beam patterns (6, 6'), the laser optics (4) have at least one diffractive optical element (7) (DOE) and, in order to determine a uniform size of the beam patterns (6, 6'), a beam expansion system, preferably downstream of the diffractive optical element (7), with the beam expansion system adjusting the size of the beam pattern (6') of the pilot laser beam (3) to the size of the beam pattern (6') of the effective laser beam (2).

6. Device according to claim 5, **characterised in that** the diffractive optical element (7) is designed as a fixed, preferably etched, diffractive optical element (7).

7. Device according to claim 5, **characterised in that** the diffractive optical element (7) is designed as a variable, preferably electronically controllable, diffractive optical element (7).

8. Device according to one of the preceding claims 5 to 7, **characterised in that** the beam expansion system has beam deflection elements (8, 9) for separating the pilot laser beam (3) from the effective laser beam (2) for part of the path length between the diffractive optical element (7) and the work pieces (5, 5').

9. Device according to one of the preceding claims 5 to 8, **characterised in that** the beam expansion system has beam expansion elements (10, 11, 13) for enlarging the beam cross-section of the pilot laser beam (3).

10. Device according to claim 8, **characterised in that** the outcoupling from and/or the incoupling of the pilot laser beam (3) into the effective laser beam (2) is performed with wavelength-dependent mirrors (8, 9) as beam deflection elements (8, 9).

11. Device according to claim 9, **characterised in that** after outcoupling, the pilot laser beam (3) is expanded with two deflecting mirrors (10, 11, 13) as expansion elements (10, 11, 13) whose distance from the deflecting elements (8, 9) is variable.

12. Device according to one of the preceding claims 5 to 11, **characterised in that** the laser optics (4) have two diffractive optical elements (7), one generating the beam pattern (6) of the effective laser beam (2) and the other generating the beam pattern (6') of the pilot laser beam (3).

13. Device according to claim 5, **characterised in that** the laser optics (4) have a second diffractive optical element (7), the laser optics (4) with the beam expansion system generating the beam pattern (6) of the effective laser beam (2) and the other generating the beam pattern (6) of the pilot laser beam (3).

14. Device according to claim 12 or 13, **characterised in that** the two diffractive elements (7) are arranged side by side on a common carrier which is supported in the laser optics (4) in such a way that it can be shifted transversely relative to the effective laser beam (2) or the pilot laser beam (3).

15. Device according to one of the preceding claims 12 to 14, **characterised in that** a fixed, preferably etched, diffractive optical element (7) or a variable, preferably electronically controllable, diffractive optical element (7) is provided for generating the beam pattern (6, 6').

## Revendications

1. Procédé pour l'usinage et/ou l'assemblage de pièces au moyen d'un rayonnement laser, avec un laser actif de puissance et un laser pilote de visée qui émettent un faisceau laser actif (2) et un faisceau laser pilote (3) de longueur d'onde différente, les faisceaux laser (2, 3) du laser actif de puissance et du laser pilote de visée étant projetés sur les pièces (5, 5') au moyen d'une optique laser (4) avec des motifs de faisceau (6. 6'), librement déterminables se recouvrant, identiques en position et en forme, **caractérisé en ce que** la forme des motifs de faisceau (6, 6') est déterminée avec au moins un élément optique diffractant (7) (DOE) intégré dans l'optique laser (4), soit en utilisant un seul élément optique diffractant (7) pour les deux faisceaux laser (2, 3) et en adaptant la plus petite section de faisceau du faisceau laser pilote (3) à la plus grande section de faisceau du faisceau laser actif (2) au moyen d'un système d'élargissement de faisceau, soit en utilisant deux éléments optiques diffractants (7) réalisés de façon différente, chaque élément optique diffractant (7) étant associé à un des deux faisceaux laser (2, 3) et l'optique laser (4) adaptant en outre l'une à l'autre la section de faisceau du faisceau laser pilote (3) et la section de faisceau du faisceau laser actif (2) de façon que la taille des motifs de faisceau (6, 6') sur les pièces (5, 5') soit à peu près égale.

2. Procédé selon la revendication 1, **caractérisé en ce que** le faisceau laser pilote (3) est séparé du faisceau laser actif (2) sur un trajet partiel entre l'élément optique diffractant (7) et les pièces (5, 5'), et agrandi en section après la séparation du faisceau laser pilote (3).

3. Procédé selon la revendication 1 ou 2, **caractérisé en ce que** la section de faisceau du faisceau laser pilote (3) après la séparation du faisceau laser actif (2) est élargie au moyen de miroirs de déviation (10. 11, 13) distants les uns des autres, variables dans leur distance par rapport aux moyens de déviation (8, 9), servant de moyens d'élargissement de faisceau, et adaptée à la section de faisceau du faisceau laser actif (2) sur les pièces (5, 5').

4. Procédé selon une des revendications précédentes, **caractérisé en ce que** le faisceau laser pilote (3) est dévié par rapport au faisceau laser actif (2) avec des miroirs (8, 9) dépendants de la longueur d'onde.

5. Dispositif (1) pour l'usinage et/ou l'assemblage de pièces au moyen d'un rayonnement laser, avec un laser actif de puissance et un laser pilote de visée qui émettent un faisceau laser actif (2) et un faisceau laser pilote (3) de longueur d'onde différente, une optique laser (4) dirigeant les faisceaux laser (2, 3) sur les pièces (5, 5') et l'optique laser (4) dirigeant les faisceaux laser (2, 3) du laser actif de puissance et du laser pilote de visée et les projetant sur les pièces (5, 5') avec des motifs de faisceau (6, 6') se recouvrant, identiques en position et en forme, **caractérisé en ce que** l'optique laser (4) présente, pour déterminer la forme des motifs de faisceau (6, 6'), au moins un élément optique diffractant (7) (DOE) et, pour déterminer une taille uniforme des motifs de faisceau (6, 6'), un système d'élargissement de faisceau placé de préférence après l'élément optique diffractant (7), le système d'élargissement de faisceau adaptant la taille du motif de faisceau (6') du faisceau laser pilote (3) à la taille du motif de faisceau (6) du faisceau laser actif (2).

6. Dispositif selon la revendication 5, **caractérisé en ce que** l'élément optique diffractant (7) est réalisé sous la forme d'un élément optique diffractant fixe, de préférence gravé.

7. Dispositif selon la revendication 5, **caractérisé en ce que** l'élément optique diffractant (7) est réalisé sous la forme d'un l'élément optique diffractant (7) variable, de préférence à commande électronique.

8. Dispositif selon une des revendications précédentes 5 à 7, **caractérisé en ce que** le système d'élargissement de faisceau présente des moyens de déviation de faisceau (8, 9) pour séparer le faisceau laser pilote (3) du faisceau laser actif (2) sur un trajet partiel entre l'élément optique diffractant (7) et les pièces (5, 5').

9. Dispositif selon une des revendications précédentes 5 à 8, **caractérisé en ce que** le système d'élargissement de faisceau présente des moyens d'élargissement de faisceau (10, 11, 13) pour agrandir la section de faisceau du faisceau laser pilote (3).

10. Dispositif selon la revendication 8, **caractérisé en ce que** le découplage et/ou le couplage du faisceau laser pilote (3) du ou dans le faisceau laser actif (2) est réalisé avec des miroirs (8, 9) dépendants de la longueur d'onde utilisés comme moyens de déviation de faisceau (8, 9).

11. Dispositif selon la revendication 9, **caractérisé en ce que** l'élargissement du faisceau laser pilote (3) après le découplage est réalisé avec deux miroirs de déviation (10, 11, 13) utilisés comme moyens d'élargissement (10, 11, 13), dont la distance par rapport aux moyens de déviation (8, 9) est réglable de manière variable.

12. Dispositif selon une des revendications précédentes 5 à 11, **caractérisé en ce que** l'optique laser (4) présente deux éléments optiques diffractants (7) dont l'un génère le motif de faisceau (6) du faisceau laser actif (2) et l'autre le motif de faisceau (6') du faisceau laser pilote (3).

13. Dispositif selon la revendication 5, **caractérisé en ce que** l'optique laser (4) présente un deuxième élément optique diffractant (7), l'optique laser (4) générant avec le système d'élargissement de faisceau le motif de faisceau (6) du faisceau laser actif (2) et l'autre je motif de faisceau (6') du faisceau laser pilote (3).

14. Dispositif selon la revendication 12 ou 13, **caractérisé en ce que** les deux éléments diffractants (7) sont disposés l'un à côté de l'autre sur un support commun qui est monté dans l'optique laser (4) avec possibilité de déplacement transversalement à la direction du faisceau laser actif (2) ou du faisceau laser pilote (3).

15. Dispositif selon une des revendications précédentes 12 à 14, **caractérisé en ce que** pour générer le motif de faisceau (6. 6'), il est prévu un élément optique diffractant (7) fixe, de préférence gravé, ou un élément optique diffractant (7) variable, de préférence à commande électronique.
